# EUROPÄISCHE PATENTSCHRIFT

(11) **EP 2 894 993 B1**
(45) Veröffentlichungstag und Bekanntmachung des Hinweises auf die Patenterteilung: **12.04.2017**
(21) Anmeldenummer: 13762371.6
(22) Anmeldetag: 14.08.2013
(51) Int. Cl.: A21B 3/13

(54) **BACKVORRICHTUNG MIT EINEM RAHMEN UND BACKFORMEN**
BAKING DEVICE WITH A FRAME AND BAKING FORMS
DISPOSITIF DE CUISSON DE PÂTISSERIES AVEC UN CADRE ET DE MULTIPLES MOULES

(30) Priorität: 14.09.2012 AT 503912012
(43) Veröffentlichungstag der Anmeldung: 22.07.2015
(73) Patentinhaber: Seletec Plastic Products GmbH & Co. Kg, 5723 Uttendorf (AT)
(72) Erfinder: RAUCH, Gerald, A-5730 Mittersill (AT); VAN DER WAAL, Nelis, A-5722 Niedernsill (AT)
(74) Vertreter: Patentanwaltskanzlei Hübscher
(86) Internationale Anmeldenummer: PCT/AT2013/050160
(87) Internationale Veröffentlichungsnummer: WO 2014/040101

(56) Entgegenhaltungen:
- EP-A2- 0 177 262
- US-A- 1 470 274
- US-A- 2 215 113
- US-A- 2 357 048
- US-A- 2 710 112
- US-A- 3 273 243
- US-A- 3 572 537

## Beschreibung

Die Erfindung bezieht sich auf eine Backvorrichtung mit mehreren von oben in einen Rahmen einsetzbaren Backformen, die einander gegenüberliegende Rahmenschenkel übergreifende Laschen aufweisen.

Bei der industriellen Herstellung von Backwaren kommen Backvorrichtungen zum Einsatz, bei denen einzelne Backformen in einen Rahmen eingesetzt werden und eine Handhabungseinheit bilden. Solche Backvorrichtungen werden beispielsweise in der US 2710112 A, der US 3572537 A, der US 2215113 A, der US 1470274 A oder auch der US 2357048 A geoffenbart. Um die einzelnen Backformen bei Beschädigungen auswechseln zu können, ist es bekannt (EP 0 177 262 A2), die Backformen mit Laschen auszurüsten, die den anliegenden Rahmenschenkel übergreifen und mit einem hakenartigen Falzende in eine sich zwischen dem Rahmenschenkel und einem dem Rahmenschenkel vorgelagerten Wulst ergebende Stecköffnung klemmend eingeführt werden. Das Lösen der Backformen vom Rahmen erfolgt durch ein Herausziehen des hakenartigen Falzendes aus der Stecköffnung. Das Verbinden und Lösen der Backformen mit dem Rahmen ist daher vergleichsweise aufwendig und somit für einen häufigen Wechsel der Backformen ungeeignet, zumal die angestrebte Klemmverbindung des hakenartigen Falzendes in der Stecköffnung für eine dauerhafte Befestigung der Backformen im Rahmen ausgelegt ist und nur gelöst werden soll, wenn die Beschichtung der Backformen beschädigt ist.

Der Erfindung liegt somit die Aufgabe zugrunde, eine Backvorrichtung der eingangs geschilderten Art so auszugestalten, dass die einzelnen Backformen einfach ausgewechselt werden können, ohne auf eine sichere Halterung der Backformen im Rahmen verzichten zu müssen.

Die Erfindung löst die gestellte Aufgabe dadurch, dass zwischen den federnd ausgebildeten Laschen und den von den Laschen übergriffenen Rahmenschenkeln Rasteinrichtungen mit in Rastaussparungen eingreifenden Rastkörpern vorgesehen sind.

Zufolge dieser Maßnahmen können die einzelnen Backformen mit einem geringen Handhabungsaufwand in den Rahmen eingesetzt werden, weil die Backformen beim Einsetzen in den Rahmen über die federnden Laschen formschlüssig mit den Rahmenschenkeln verrastet werden, wenn die Backformen am Rahmen lastabtragend anschlagen. Die selbstständige Verrastung der aus Rastaussparungen und in diese Rastaussparungen eingreifenden Rastkörpern gebildeten Rasteinrichtungen wird durch die federelastischen Eigenschaften der Laschen sichergestellt, die zum Einführen der Rastkörper in die Rastaussparungen ausgelenkt werden, um beim Erreichen der Raststellung den Eingriff der Rastkörper in die Rastaussparungen über die federnde Vorspannung der Laschen sicherzustellen. Für die Funktion der Rasteinrichtungen ist es dabei unerheblich, ob die Rastkörper der Lasche oder dem Rahmenschenkel zugeordnet werden. Zum Entnehmen der Backformen aus dem Rahmen ist die Rasteinrichtung zu lösen, indem die Laschen entsprechend ausgelenkt werden, sodass die Rastkörper die Rastaussparungen freigeben und die Backformen nach oben aus dem Rahmen ausgehoben werden können.

Weisen die Rahmenschenkel Aufnahmeaussparungen für die Laschen auf, so ergibt sich nicht nur eine kompakte Bauweise ohne über den Rahmen störend vorstehende Konstruktionsteile, sondern auch eine zusätzliche Sicherheit gegenüber einem unbeabsichtigten Lösen der Rasteinrichtung, weil das für das Auslenken der Laschen erforderliche Hintergreifen der Laschen erschwert wird. Um trotzdem ein einfaches Lösen der Rasteinrichtung zu ermöglichen, können die Aufnahmeaussparungen im Anschluss an die Laschen Ausnehmungen für einen die Laschen hintergreifenden Werkzeugansatz aufweisen.

Die formschlüssige Verbindung zwischen den einzelnen Backformen und dem Rahmen über die Rasteinrichtungen erfordert eine seitliche Ausrichtung der Backformen gegenüber dem Rahmen. Damit die Backformen in Hinblick auf diese Ausrichtung geführt in den Rahmen eingesetzt werden können, können die Laschen über in Einsetzrichtung verlaufende Stege mit der anschließenden Wand der Backform verbunden sein und die Rahmenschenkel nach oben offene Führungsschlitze für die Stege aufweisen. Die beim Einsetzen der Backformen in den Rahmen in die Führungsschlitze eingreifenden Stege gewährleisten die geforderte Ausrichtung der Backformen gegenüber dem Rahmen und in der Folge eine sichere Verrastung über die Rasteinrichtung.

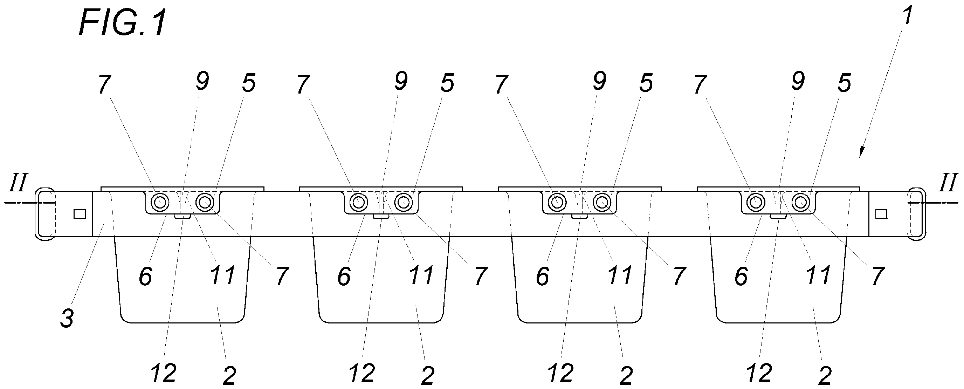

In der Zeichnung ist der Erfindungsgegenstand beispielsweise dargestellt. Es zeigen
- Fig. 1: eine erfindungsgemäße Backvorrichtung in einer vereinfachten Seitenansicht,
- Fig. 2: die Backvorrichtung nach der Fig. 1 in einer zum Teil aufgerissenen Draufsicht in einem größeren Maßstab,
- Fig. 3: einen Schnitt nach der Linie III-III der Fig. 2 in einem größeren Maßstab und
- Fig. 4: einen Schnitt nach der Linie IV-IV der Fig. 2, ebenfalls in einem größeren Maßstab.

Die Backvorrichtung umfasst einen geschlossenen, im Wesentlichen rechteckigen Rahmen 1 zur Aufnahme mehrerer Backformen 2, die von oben in den Rahmen 1 eingesetzt werden und sich an den einander gegenüberliegenden, in Rahmenlängsrichtung verlaufenden Schenkeln 3 des Rahmens 1 lastabtragend abstützen. Auf den Schmalseiten des rechteckförmigen Rahmens 1 bildet dieser Griffe zur Handhabung der Backvorrichtung.

Die Backformen 2 weisen einen umlaufenden Randflansch 4 auf, über den sie in den Rahmen 1 eingehängt werden. Von den den Rahmenlängsseiten zugehörigen Abschnitten der Randflansche 4 stehen die Rahmenschenkel 3 übergreifende, federelastische Laschen 5 nach unten ab, die vorzugsweise in eine Aufnahmeaussparung 6 der Rahmenschenkel 3 eingreifen, sodass sich keine in störender Weise über den Rahmen 1 vorstehende Konstruktionsteile ergeben. Diese Laschen 5 werden mit den Rahmenschenkeln 3 über eine Rasteinrichtung formschlüssig verrastet, die in Rastaussparungen 7 eingreifende Rastkörper 8 umfasst. Gemäß dem dargestellten Ausführungsbeispiel sind die Rastaussparungen 7 den Laschen 5 und die Rastkörper 8 den Rahmenschenkeln 3 zugeordnet, was jedoch nicht zwingend ist.

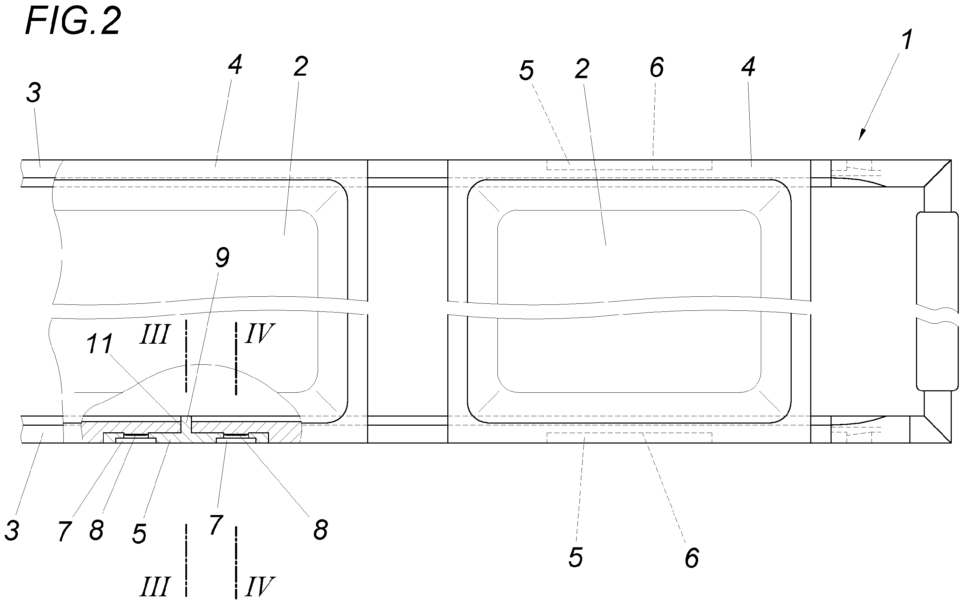

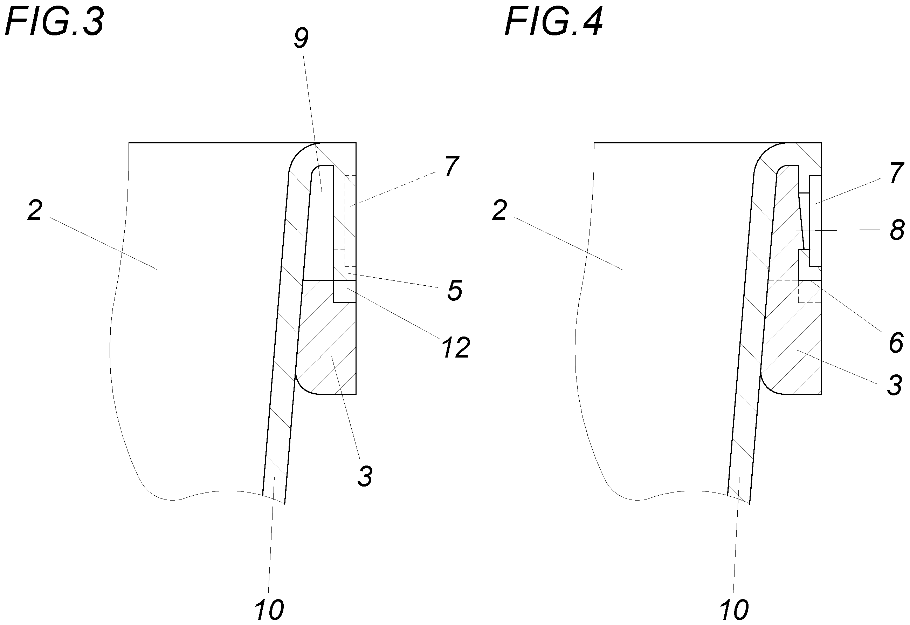

Wie insbesondere den Fig. 2 und 3 entnommen werden kann, sind die Laschen 5 außerhalb der Rasteinrichtung über Stege 9 mit der anschließenden Wand 10 der Backformen 2 verbunden. Diese in Einsetzrichtung der Backformen 2 in den Rahmen 1 verlaufenden, quer zum Rahmenschenkel 3 ausgerichteten Stege 9 greifen in Führungsschlitze 11 der Rahmenschenkel 3 ein, womit eine seitliche Führung der Backformen 2 bei Ihrem Einsetzen in den Rahmen 1 gewährleistet werden kann. Mit dieser seitlichen Führung der Backformen 2 ergibt sich eine selbstständige Ausrichtung der Rastkörper 8 gegenüber den Rastaussparungen 7, sodass beim Einsetzen der Backformen 2 in den Rahmen 1 die Backformen 2 sicher formschlüssig mit dem Rahmen 2 verrastet werden.

Zum Lösen der Rastverbindung zwischen den Backformen 2 und den Rahmenschenkeln 3 sind die Laschen 5 von den anliegenden Rahmenschenkeln 3 abzuheben, damit die Rastkörper 8 aus den Rastaussparungen 7 austreten können. Da die Laschen 5 jedoch in den Aufnahmeaussparungen 6 der Rahmenschenkel 3 liegen, ist es schwierig, die Laschen 5 zu diesem Zweck zu hintergreifen. Aus diesem Grunde sind im Anschluss an die Aufnahmeaussparungen 6 Ausnehmungen 12 für einen Werkzeugansatz in den Rahmenschenkeln 3 vorgesehen. Über diese Ausnehmungen 12 können die Laschen 5 mit Hilfe eines entsprechenden Werkzeuges in einfacher Weise hintergriffen und vom Rahmenschenkel 3 soweit abgehoben werden, dass sich die Rastverbindung löst.

Die Erfindung ist selbstverständlich nicht auf das dargestellte Ausführungsbeispiel eingeschränkt. So könnten beispielsweise die Rasteinrichtungen nicht zwei mit entsprechenden Rastaussparungen 7 zusammenwirkende Rastkörper 8, sondern jeweils nur einen solchen Rastkörper 8 aufweisen. Außerdem könnten die Laschen 5 mit einem Betätigungsansatz versehen sein, um das Lösen des Rasteingriffes zu erleichtern.

## Patentansprüche

1. Backvorrichtung mit einem Rahmen (1) und mehreren von oben in den Rahmen (1) einsetzbaren Backformen (2), die einander gegenüberliegende Schenkel (3) des Rahmens (1) übergreifende Laschen (5) aufweisen, **dadurch gekennzeichnet, dass** zwischen den federnd ausgebildeten Laschen (5) und den von den Laschen (5) übergriffenen Rahmenschenkeln (3) Rasteinrichtungen mit in Rastaussparungen (7) eingreifenden Rastkörpern (8) vorgesehen sind.

2. Backvorrichtung nach Anspruch 1, **dadurch gekennzeichnet, dass** die Rahmenschenkel (3) Aufnahmeaussparungen (6) für die Laschen (5) aufweisen.

3. Backvorrichtung nach Anspruch 2, **dadurch gekennzeichnet, dass** die Aufnahmeaussparungen (6) im Anschluss an die Laschen Ausnehmungen (12) für einen die Laschen (5) hintergreifenden Werkzeugansatz aufweisen.

4. Backvorrichtung nach einem der Ansprüche 1 bis 3, **dadurch gekennzeichnet, dass** die Laschen (5) über in Einsetzrichtung verlaufende Stege (9) mit der anschließenden Wand (10) der Backform (2) verbunden sind und dass die Rahmenschenkel (3) nach oben offene Führungsschlitze (11) für die Stege (8) aufweisen.

## Claims

1. Baking device comprising a frame (1) and a plurality of baking moulds (2) which can be inserted into the frame (1) from the top and comprise tabs (5) which engage over mutually opposing limbs (3) of the frame (1), **characterised in that** latching devices having latching bodies (8) engaging into latching recesses (7) are provided between the resiliently formed tabs (5) and the frame limbs (3), over which the tabs (5) engage.

2. Baking device as claimed in claim 1, **characterised in that** the frame limbs (3) comprise receiving recesses (6) for the tabs (5).

3. Baking device as claimed in claim 2, **characterised in that** the receiving recesses (6) comprise openings (12) following the tabs for a tool lug which engages behind the tabs (5).

4. Baking device as claimed in any one of claims 1 to 3, **characterised in that** the tabs (5) are connected to the adjacent wall (10) of the baking mould (2) via connecting pieces (9) extending in the insertion direction, and **in that** the frame limbs (3) comprise guide slots (11), which are open at the top, for the connecting pieces (8).

## Revendications

1. Dispositif de cuisson de pâtisseries avec un cadre (1) et plusieurs moules à gâteau (2) pouvant être introduits par le haut dans le cadre (1), qui comportent des pattes (5) recouvrant des branches (3) opposées du cadre (1), **caractérisé en ce que** des dispositifs d'encliquetage sont munis de corps d'encliquetage (8) s'engageant dans des évidements d'encliquetage (7) entre les pattes élastiques (5) et les branches du cadre (3) recouvertes par les pattes (5).

2. Dispositif de cuisson de pâtisseries selon la revendication 1, **caractérisé en ce que** les branches du cadre (3) présentent des évidements de réception (6) pour les pattes (5).

3. Dispositif de cuisson de pâtisseries selon la revendication 2, **caractérisé en ce que** les évidements de réception (6) présentent en liaison au niveau des pattes, des évidements (12) pour un embout d'outil venant en prise derrière les pattes (5).

4. Dispositif de cuisson de pâtisseries selon l'une des revendications 1 à 3, **caractérisé en ce que** les pattes (5) sont reliées à la paroi (10) suivante du moule à gâteau (2), par le biais de barrettes (9) placées dans le sens d'insertion, et **en ce que** les branches du cadre (3) présentent des fentes de guidage (11) ouvertes vers le haut pour les barrettes (8).
